# EUROPEAN PATENT SPECIFICATION

(11) **EP 1 645 491 B1**
(45) Date of publication and mention of the grant of the patent: **03.12.2008**
(21) Application number: 05292086.5
(22) Date of filing: 07.10.2005
(51) Int. Cl.: B62D 25/08

(54) **Radiator core support structure**
Tragstruktur für Kraftfahrzeugkühlerblock
Structure de support pour bloc de radiateur d'un véhicule

(30) Priority: 08.10.2004 JP 2004296861
(43) Date of publication of application: 12.04.2006
(73) Proprietor: Calsonic Kansei Corporation, Tokyo 164-8602 (JP)
(72) Inventor: Miura, Satoru, Kanagawa 242 - 0026 (JP); Furukawa, Toshihide c/o Calsonic Kansei Corporation, Tokyo 164-8602 (JP); Hirai, Tadahiro c/o Calsonic Kansei Corporation, Tokyo 164-8602 (JP)
(74) Representative: Intes, Didier Gérard André

(56) References cited:
- EP-A- 1 498 296
- EP-A1- 0 437 780
- EP-A1- 1 167 165
- EP-A1- 1 413 501
- US-B1- 6 450 276

## Description

The present invention relates to a radiator core support structure for mounting a heat exchanger on a motor vehicle.

Hitherto, a radiator core support structure for a motor vehicle is described in Japanese Patent Application Laid-open No. 2003-81135, which has an upper radiator core support extending in a lateral direction of a motor vehicle body, a lower radiator core support extending in parallel with the upper radiator core support, radiator core support sides fixing both end portions of the upper radiator core support and the lower radiator core support to each other, and a hood lock stay fixing center portions of the upper radiator core support and the lower radiator core support to each other. EP 1 167 165 A1 also discloses a radiator core support structure, which has a front end including an upper beam, a lower beam, pillars that are integrally formed as a rectangular frame.

Also, Japanese Patent Application Laid-open No. 2002-19638 discloses a technology on a radiator core support of a type in which the upper radiator core support is omitted from the first conventional structure described above.

However, in both of the former conventional radiator core support structures, when the heat exchanger is attached to the radiator core support by inserting it between both the radiator core support sides from an upper side, the heat exchanger comes in contact with the upper radiator core support, becoming an obstacle to its insertion, so that the heat exchanger needs to be fixed in such a way that, after it is inserted between both the radiator core support sides from an obliquely upper side and then its lower portion is fixed to the lower radiator core support, the heat exchanger is raised to stand upright and its upper portion is fixed to the upper radiator core support. This causes a problem of requiring a lot of labor for attachment as well as a large working space.

Also, in the latter radiator core support structure, with the upper radiator core support, which is the obstacle to the insertion, being omitted, the heat exchanger can be inserted and fixed between both the radiator core support sides from the upper side of the radiator core support, but the overall stiffness of the radiator core support decreases, so that each part thereof needs to be formed with a large thickness to increase their stiffness. This causes a problem of increasing weight and a manufacturing cost.

Note that, since impact force generated in the event of a light crash of a motor vehicle acts on the radiator core support so as to open outward in the lateral direction of the vehicle body, the upper radiator core support serves as a beam member to prevent deformation of both the radiator core support sides outward in the lateral direction. However, since radiator core supports of recent years are formed integrally using resin or metal, they require a lot of labor and cost to be repaired or replaced.

US 6,450,276 B1 further discloses a radiator core structure, which has a first part including a metal member (a radiator core support upper cover) extending in a lateral direction of a motor vehicle and integrally formed with a pair of first side portions (radiator support upper sides) extending downward, and a second part including a central member portion (a lower radiator core support) integrally formed with a pair of vertically upstanding portions (radiator core support lower sides), where the first and second parts are detachably joined with each other by connecting the first side portions of the first part and the vertically upstanding portions of the second part by bolts.

Document EP 1 167 165 discloses a radiator care support structure according to the preamble of claim 1.

The present invention is made to solve the above-described problems, and an object thereof is to provide a radiator core support structure which can provide excellent workability for mounting a heat exchanger on a radiator core support without causing decrease of the overall stiffness of the radiator core support.

A radiator core support structure according to the present invention includes a lower radiator core support extending in a lateral direction of a motor vehicle body, radiator core support sides extending upward respectively from both end portions of the lower radiator core support, a fan shroud portion provided inside the lower radiator core support and both the radiator core support sides, and a radiator core support upper cover provided to cover at least an upper side between both the radiator core support sides. The lower radiator core support, both said radiator core support sides, and said fan shroud portion are formed integrally, and the radiator core support upper cover is fixed detachably at least on upper portions of the radiator core support sides. The radiator core support upper cover is formed with attachment holes to fix mounting pins of the heat exchanger, and provided on a bottom face thereof with sandwiching portions to sandwich and fix tongue pieces of the fan shroud portion in a forward and backward direction thereof.

Therefore, when the heat exchanger is assembled, the heat exchanger is inserted from an upper side between both the radiator core support sides and attached thereto in a state that the radiator core support upper cover is removed, and the radiator core support upper cover can be attached thereafter. Accordingly, the heat exchanger can be attached to the radiator core support simply within a small working space, because the heat changer does not need to be slanted when it is inserted between both the radiator core support sides. In addition, both the heat exchanger and the radiator core support cover can be appropriately fixed in a positioned state.

Further, the overall stiffness of the radiator core support can be improved by the fan shroud portion and the radiator core support upper cover, and particularly, it is possible to prevent, in the event of a light crash of a motor vehicle, deformation of both the radiator core support sides to open outward in the vehicle width direction to thereby cause a crack/damage.

Moreover, by providing the radiator core support upper cover in a detachable manner, an operation of repairing or replacing the heat exchanger .can be easily performed.

Preferably, the radiator core support structure further comprises a detachable hood lock stay fixing center portions of the radiator core support upper cover and the lower radiator core support to each other.

Therefore, impact force in the event of light crash of a motor acts is transferred to both the radiator core support sides through the hood lock stay, so that damaged portions are stopped at the hood lock stay or the radiator core support upper cover, which enables them to be easily replaced for repair, thus suppressing cost of repairing or replacing low.

Preferably, the radiator core support upper cover is fixed detachably on an upper portion of the fan shroud portion.

Therefore, the radiator core support upper cover can be stably fixed to the fan

Preferably, the radiator core support upper cover is fixed to the fan shroud portion and the radiator core support sides.

Therefore, the radiator core support upper cover can be stably fixed to the fan shroud portion and the radiator core support sides, and thereby increase the overall stiffness of the radiator core support.

Preferably, the radiator core support upper cover is fixed to the fan shroud portion and the radiator core support sides.

The objects, features and advantages of the present invention will become apparent as the description proceeds when taken in conjunction with the accompanying drawings, in which:
FIG. 1 is an exploded overall perspective view showing a radiator core support structure of an embodiment according to the present invention;
FIG. 2 is an overall perspective view showing the radiator core support structure of the embodiment;
FIG. 3 is a perspective view showing a radiator core support used in the radiator core support structure shown in FIGS. 1 and 2;
FIG. 4 is a perspective view showing a radiator core support upper cover used in the radiator core support shown in FIG. 3;
FIG. 5 is a perspective view showing a hood lock stay used in the radiator core support shown in FIG. 3;
FIG. 6 is a view explaining how to mount a heat exchanger on the radiator core support shown in FIGS. 1 to 3;
FIG. 7A is a view explaining how to fix a radiator core support upper cover to radiator core support sides used in the radiator core support shown in FIG. 3, and FIG. 7B is an enlarged view of a circle portion indicated by B in FIG. 7A; and
FIG. 8 is a view explaining how to fix the hood lock stay to radiator core support sides used in the radiator core support shown in FIG. 3.

Hereinafter, an embodiment of the present invention will be described with reference to the accompanying drawings.

Hereinafter, an embodiment will be explained. First, the entire structure of a radiator core support structure for a motor vehicle will be described.

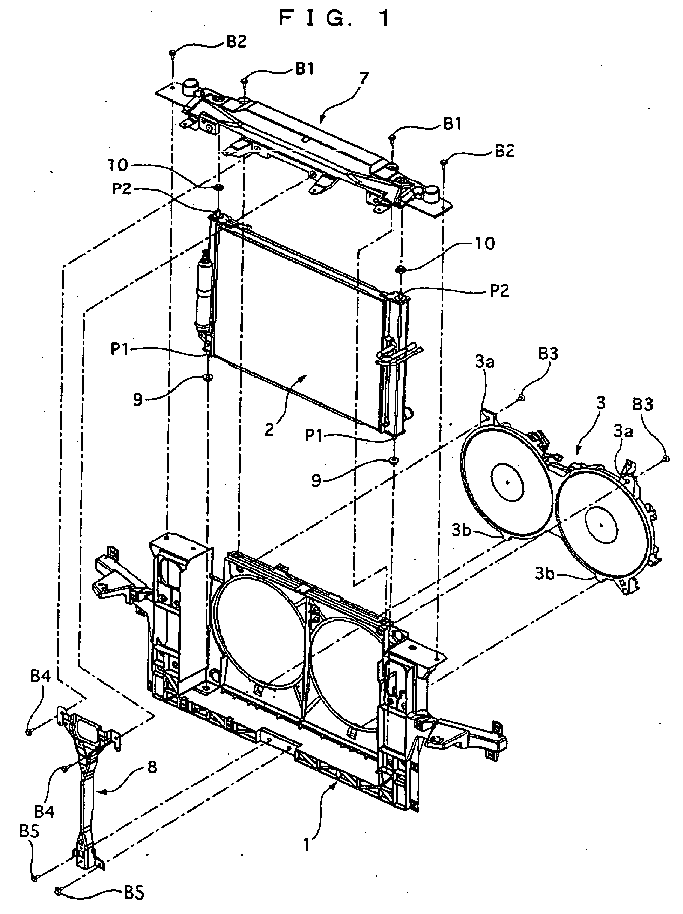

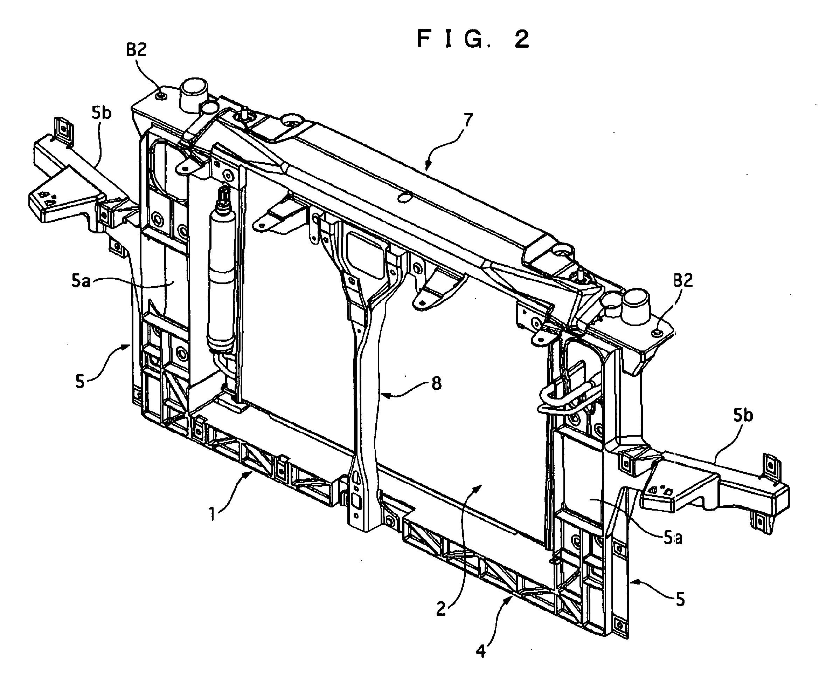

As shown in FIG. 1 and FIG. 2, the radiator core support structure of this embodiment has a radiator core support 1 mounted on a front side of a vehicle body, a heat exchanger 2 for cooling coolant and cooling medium, and a motor fan 3 for cooling the heat exchanger 3. The heat exchanger 2 and the motor fan 3 are fixed to the radiator core support 1, which will be described below in detail.

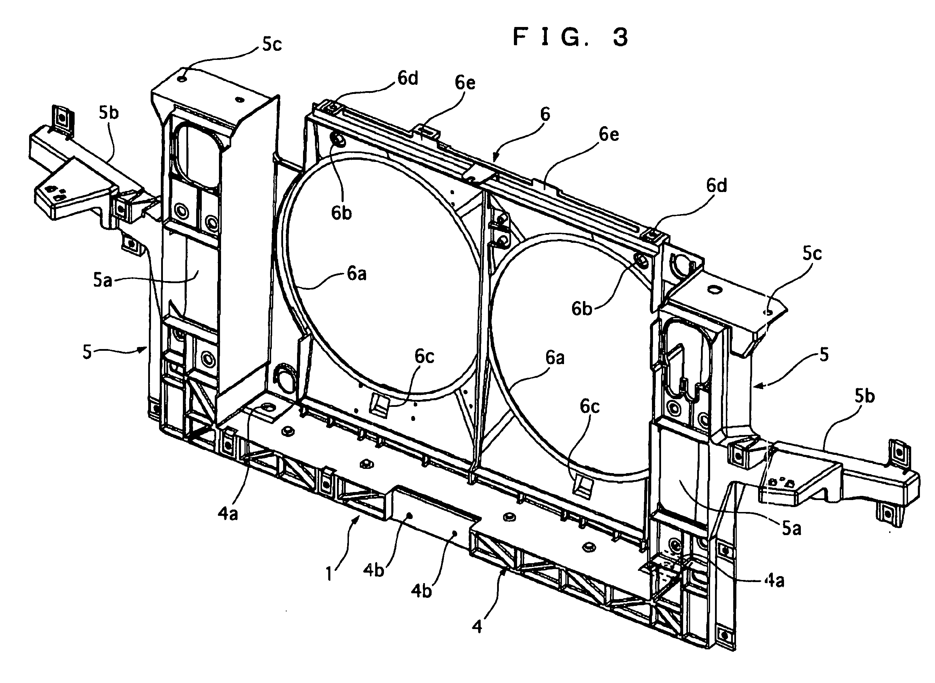

As shown in FIG. 3, the radiator core support 1 has a lower radiator core support 4 extending in a lateral direction of the vehicle body, two radiator core support sides 5 and 5 extending upward respectively from both end portions of the lower radiator core support, and a fan shroud portion 6 provided inside the lower radiator core support 4 and both the radiator core support sides 5 and 5. The lower radiator core support 4, the radiator core support sides 5 and 5 and the fan shroud portion 6 are integrally formed of resin.

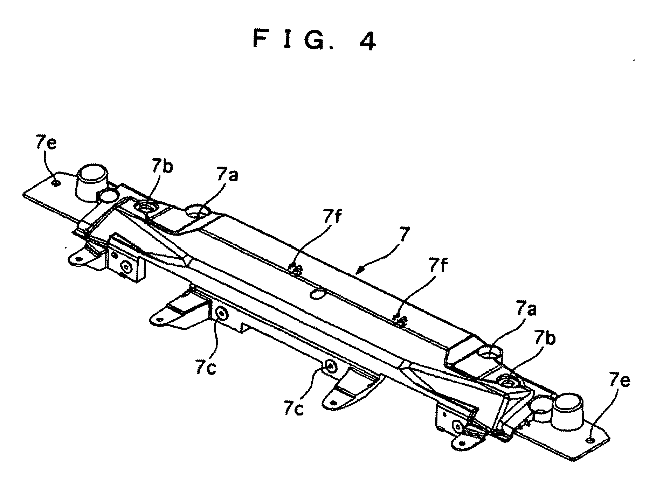

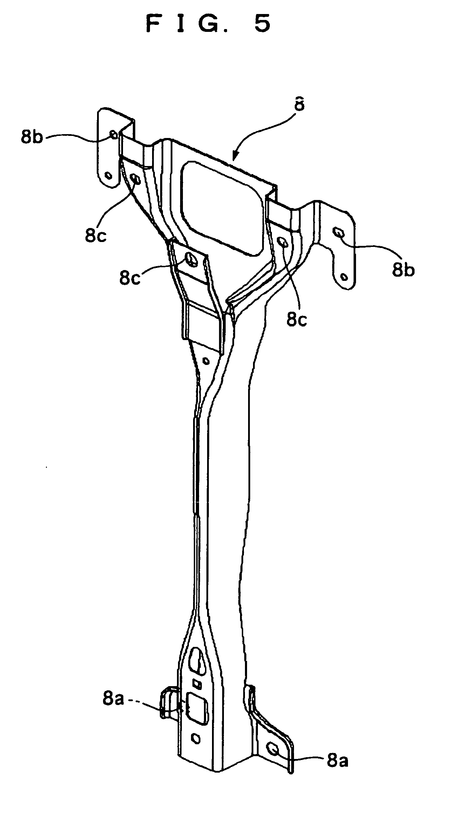

Further, a radiator core support upper cover 7 shown in FIG. 4 is provided so as to couple both the radiator core support sides 5 and 5 to each other, and a hood lock stay 8 shown in FIG. 5 is provided so as to couple center portions of the radiator core support upper cover 7 and the lower radiator core support 4 to each other.

The lower radiator core support 4 is formed to have a cross-section in shape of a letter of L or the like opening downward and rearward, and on a top face thereof, two attachment holes 4a and 4a are formed at positions corresponding to mounting pins P1 and P1, shown in FIG. 1, provided respectively on both ends of a lower side of the heat exchanger 2.

Further, on a front side face of the lower radiator core support 4, two attachment holes 4b and 4b are formed at positions corresponding to attachment holes 8a and 8a of a lower portion of the hood lock stay 8.

The radiator core support sides 5 and 5 are formed to have a cross section in a shape of a letter of C or the like opening rearward, and two side member attachment holes 5a and 5a for coupling not-shown side members and bumper stays are formed respectively therein.

Two head lamp stays 5b and 5b for fixing and supporting not-shown head lamps are formed respectively in the vicinities of the side member attachment holes 5a and 5a in a state of projecting outward in the lateral direction.

Moreover, on top faces of both the radiator core support sides 5 and 5, two attachment holes 5c and 5c are formed at positions corresponding to attachment holes 7e and 7e of the radiator core support upper cover 7.

The fan shroud portion 6 is formed integrally with and inside of the lower radiator core support 4 and both the radiator core support sides 5 and 5, thereby increasing the overall stiffness of the radiator core support 1.

Further, on left and right sides of the center of the fan shroud portion 6, two openings 6a and 6a for accommodating a motor fan 3 are formed, and above the openings 6a and 6a, two attachment holes 6b and 6b are formed at positions corresponding to attachment holes 3a and 3a of the motor fan 3 as shown in FIG. 1. On the other hand, below the openings 6a and 6a, two attachment holes 6c are 6c are formed at positions corresponding to inserting projections 3b and 3b of the motor fan 3 as shown in FIG. 1.

Further, on an upper portion of the fan shroud portion 6, two attachment holes 6d and 6d are formed at positions corresponding to attachment holes 7a and 7a of the radiator core support upper cover 7, and also two tongue pieces 6e and 6e projecting upward in a plate shape are formed at positions corresponding to sandwiching portions 7f and 7f constituted of two pieces formed on a bottom face of the radiator core support upper cover 7.

The radiator core support upper cover 7 has a main purpose of improving the design inside an engine room as well as preventing blowing back of hot air to the front side of the heat exchanger, and is formed of resin in a plate shape. On a top face of the radiator core support upper cover 7, the attachment holes 7a and 7a and the attachment holes 7e and 7e are formed, and two attachment holes 7b and 7b are formed at positions corresponding to mounting pins P2 and P2, as shown in FIG. 1, provided respectively on both ends of an upper side of the heat exchanger 2.

Further, on a front side face of the radiator core support upper cover 7, two attachment holes 7c and 7c are formed at positions corresponding to attachment holes 8b and 8b on an upper portion of the hood lock stay 8.

Further, on a rear face of the radiator core support upper cover 7, the sandwiching portions 7f and 7f are formed.

The hood lock stay 8 is formed by press forming a metal plate, and on the upper portion thereof, the attachment holes 8b and 8b are formed, and three attachment holes 8c for fixing a not-shown hood lock stay are formed.

Further, two attachment holes 8a are 8a are formed on a lower portion of the hood lock stay 8.

As the heat exchanger 2 of this embodiment, there is adopted an integral-type heat exchanger formed integrally of a condenser core and a radiator core, which are arranged closely.

Next, the operations of the radiator core support structure will be described.

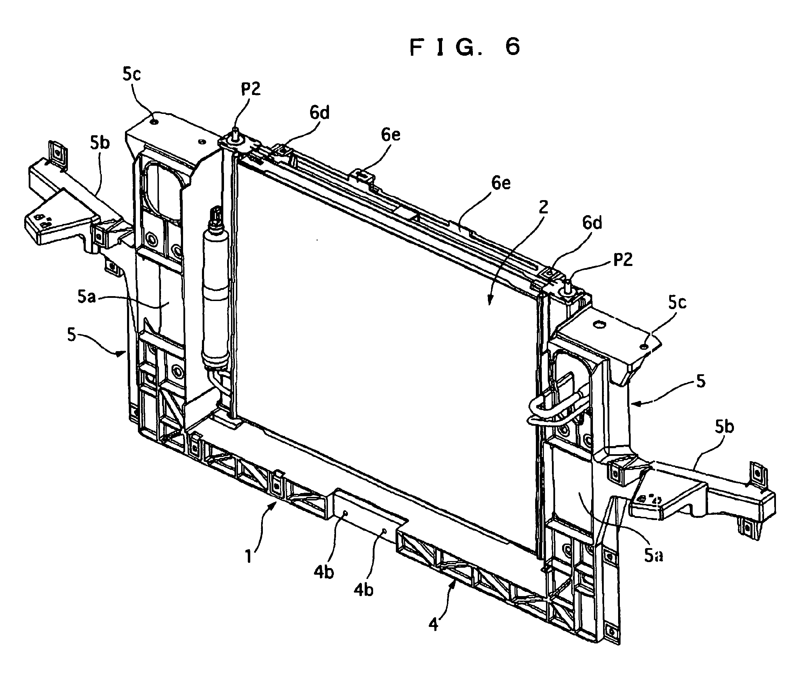

When assembling a radiator core support structure, as shown in FIG. 1 and FIG. 6, the heat exchanger 2 is inserted in an upright state thereof from a top side between both the radiator core support sides 5 and 5, and the mounting pins P1 and P1 being inserted into lower mount bushes 9 are 9 are fixed to the attachment holes 4a and 4a of the lower radiator core support 4.

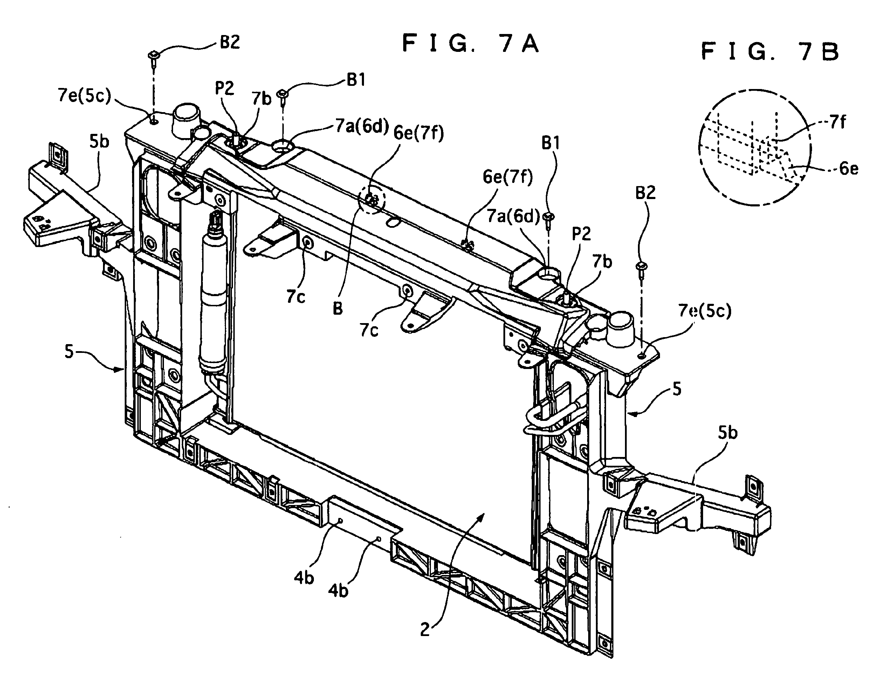

Next, as shown in FIG. 1 and FIG. 7, in a state that the mounting pins P2 and P2 of the heat exchanger are inserted into upper mount bushes 10 and 10, the radiator core support upper cover 7 is placed from an upper side thereof, thereby fixing the mounting pins P2 and P2 in the attachment holes 7b and 7b of the radiator core support upper cover 7 via the upper mount bushes 10 and 10.

Next, screws B 1 and B 1 are inserted through the attachment holes 7a and 7a of the radiator core support upper cover 7 and the attachment holes 6d and 6d of the fan shroud portion and fixed therein, and screws B2 and B2 are inserted through the attachment holes 7e and 7e of the radiator core support upper cover 7 and the attachment holes 5c and 5c of both the radiator core support sides 5 and 5 and fixed therein, thereby mounting the radiator core support upper cover 7 and the heat exchanger 2 on the radiator core support 1.

At this time, the attachment holes 7b and 7b of the radiator core support upper cover 7 fix the mounting pins P2 and P2 of the heat exchanger 2, and the two sandwiching portions 7f and 7f on the bottom face of the radiator core support upper cover 7 sandwich and fix the tongue pieces 6e and 6e of the fan shroud portion 6 in a forward and backward direction of the vehicle body respectively, so that both the heat exchanger 2 and the radiator core support upper cover 7 can be appropriately fixed in a positioned state.

Therefore, it is not necessary to insert the heat exchanger 2 in a slanted state from an obliquely upper side between both the radiator core support sides 5 and 5 and raise it upright thereafter as in the above-described former prior invention, so that the heat exchanger 2 can be simply and appropriately attached within a small working space, which also enables automatic assembly by machine.

Next, after the inserting projections 3b and 3b of the motor fan 3 are inserted into the attachment holes 6c and 6c of the fan shroud portion 6, screws B3 and B3 are inserted through the insertion holes 6b and 6b of the fan shroud portion 6 and the attachment holes 3a and 3a of the motor fan 3 and fixed therein, thereby mounting the motor fan 3 on the radiator core support 1.

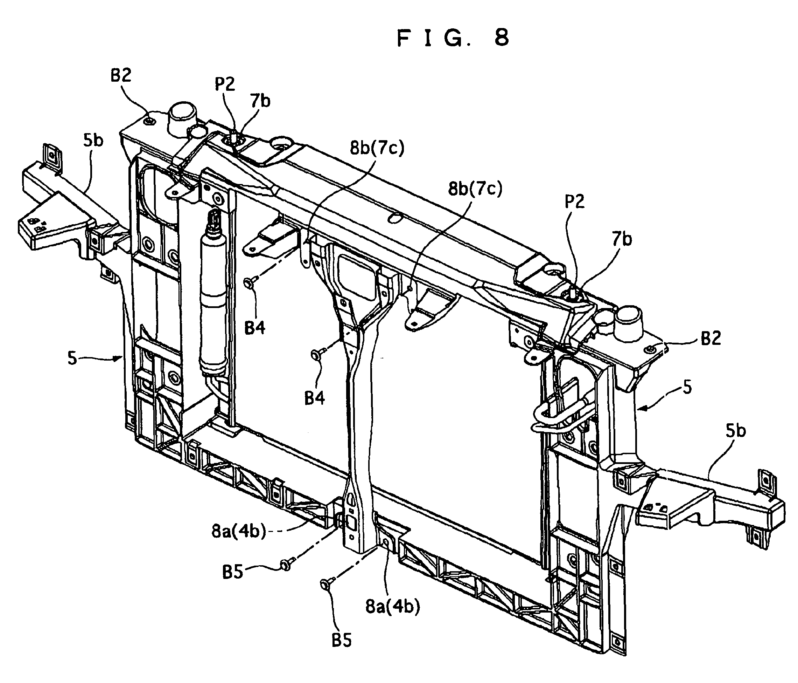

Next, as shown in FIG. 1 and FIG. 8, screws B4 and B4 are inserted through the attachment holes 8b and 8b of the hood lock stay 8 and the attachment holes 7c and 7c of the radiator core support upper cover 7 and fixed therein, and screws B5 and B5 are inserted through the attachment holes 8a and 8a of the hood lock stay 8 and the attachment holes 4b and 4b of the lower radiator core support 4 and fixed therein, thereby fixing the hood lock stay 8 onto the radiator core support 1 and completing the assembly of the radiator core support 1 as shown in FIG. 2.

The radiator core support 1 constructed as above is, after not-shown peripheral members such as head lamps, a bumper stay, a bumper armature, and the others are attached, transported to an assembly factory of motor vehicles and mounted on a motor vehicle.

In the event of a light crash of a motor vehicle, an impact force thereof acts on both the radiator core support sides 5 and 5 so as to open outward in the lateral direction of the vehicle body, but the fan shroud portion 6 formed integrally with and inside of both the radiator core support sides 5 and 5 and the lower radiator core support 4 and the radiator core support upper cover 7 coupled to the both of them serve as a beam member to prevent deformation of both the radiator core support sides 5 and 5 outward in the vehicle width direction. Therefore, a crack/damage on the radiator core support 1 can be prevented.

Also, the impact force transferred to the hood lock stay 8 can always be transferred to both the radiator core support sides 5 and 5 and the fan shroud portion 6 via the radiator core support upper cover 7, so that damaged portions are stopped at the hood lock stay 8 or the radiator core support upper cover 7 and thus the cost of fixing or replacing can be suppressed low.

Moreover, since the radiator core support upper cover 7 and the hood lock stay 8 are detachable from the radiator core support 1, maintainability inside the engine room is improved, and particularly, an operation of repairing or replacing the heat exchanger becomes simpler.

Next, the effects of the radiator core support structure of the embodiment will be described.

In the radiator core support structure constructed as above, when the heat exchanger 2 is assembled, the heat exchanger 2 is inserted from an upper side between both the radiator core support sides 5 and 5 and attached thereto in a state that the radiator core support upper cover 7 is removed, and the radiator core support upper cover 7 can be attached thereafter. Accordingly, the heat exchanger 2 can be attached to the radiator core support 1 simply within a small working space.

Also, as compared to the prior inventions, the fan shroud portion 6 and the radiator core support upper cover 7 can improve the overall stiffness of the radiator core support while omitting an upper radiator core support, and particularly, deformation of both the radiator core support sides 5 and 5 outward in the lateral direction in the event of a light crash of a motor vehicle can be prevented.

In addition, since the center portions of the radiator core support upper cover 7 and the lower radiator core support are fixed to each other by the detachable hood lock stay 8, impact force in the event of a light crash of a motor vehicle can always be transferred from the hood lock stay 8 to the vehicle body side via the radiator core support upper cover 7, which minimizes damaged portions and thus the cost of repairing or replacing can be suppressed low.

Moreover, by providing the radiator core support upper cover 7 in a detachable manner, an operation of repairing or replacing the heat exchanger 2 can be easily performed.

Also, since the radiator core support upper cover 7 and the upper portion of the fan shroud portion 6 are fixed to each other, the radiator core support upper cover 7 can be fixed stably, and moreover the overall stiffness of the radiator core support 1 can be improved.

Shapes and materials of the hood lock stay 8 and the radiator core support upper cover 7 can be determined appropriately.

## Claims

1. A radiator core support structure comprising:
a lower radiator core support (4) extending in a lateral direction of a motor vehicle body and supporting a bottom portion of a heat exchanger;
radiator core support sides (5, 5) extending upward respectively from both end portions of said lower radiator core support (4);
a fan shroud portion (6) provided inside said lower radiator core support (4) and both said radiator core support sides (5, 5); and
a radiator core support upper cover (7) provided to cover at least an upper side between both said radiator core support sides (5, 5),
said lower radiator core support (4), both said radiator core support sides (5, 5), and said fan shroud portion (6) are formed integrally,
wherein the radiator core support structure is **characterized in that**
whereby said radiator core support upper cover (7) is fixed detachably at least on upper portions of said radiator core support sides (5, 5),
said radiator core support upper cover (7) is formed with attachment holes (7b, 7b) to fix mounting pins (P2, P2) of said heat exchanger (2), and provided on a bottom face thereof with sandwiching portions (7f, 7f) to sandwich and fix tongue pieces (6e, 6e) of said fan shroud portion (6) in a forward and backward direction thereof.

2. The radiator core support structure according to claim 1, **characterized in that** said structure further comprises a detachable hood lock stay (8) fixing center portions of said radiator core support upper cover (7) and said lower radiator core support (4) to each other.

3. The radiator core support structure according to claim 1 or 2, **characterized in that** said radiator core support upper cover (7) is further fixed detachably on an upper portion of said fan shroud portion (6).

4. The radiator core support structure according to one of claims 1 to 3, **characterized in that** said radiator core support sides (5,5) are respectively provided with a lamp stay (5b,5b) formed in the vicinities of a side member attachment hole (5a, 5a), said lamp stay (5b, 5b) being projecting outward in the lateral direction for fixing and supporting a head lamp.

5. The radiator core support structure according to one of claims 1 to 4, **characterized in that** two tongue pieces (6e, 6e) are projecting upward in a plate shape at positions corresponding to the sandwiching portions (7f, 7f), said sandwiching portions being constituted of two pieces formed on a bottom face of the radiator core support upper cover (7).

6. The radiator core support structure according to one of claims 1 to 5, **characterized in that** the lower radiator core support 4 is formed to have a cross-section in shape of a letter of L or the like opening downward and rearward.

## Patentansprüche

1. Kühlerträgerkonstruktion, umfassend:
einen unteren Kühlerträger (4), der sich in einer seitlichen Richtung einer Kraftfahrzeugkarosserie erstreckt und einen unteren Abschnitt eines Wärmetauschers abstützt,
Kühlerträgerseiten (5, 5), die sich jeweils von beiden Endabschnitten des unteren Kühlerträgers (4) nach oben erstrecken,
einen Ventilatorummantelungsabschnitt (6), der im Inneren des unteren Kühlerträgers (4) und beider Kühlerträgerseiten (5, 5) vorgesehen ist, und
eine obere Kühlerträgerabdeckung (7), die zum Abdecken von wenigstens einer oberen Seite zwischen beiden Kühlerträgerseiten (5, 5) vorgesehen ist, wodurch
der untere Kühlerträger (4), beide Kühlerträgerseiten (5, 5) und der Ventilatorummantelungsabschnitt (6) einstückig ausgebildet sind,
wobei die Kühlerträgerkonstruktion **dadurch gekennzeichnet ist, daß**
die obere Kühlerträgerabdeckung (7) zumindest an oberen Abschnitten der Kühlerträgerseiten (5, 5) lösbar befestigt ist und
die obere Kühlerträgerabdeckung (7) mit Befestigungsöffnungen (7b, 7b) zum Anbringen von Befestigungsstiften (P2, P2) des Wärmetauschers (2) ausgebildet und an einer Bodenfläche desselben mit Spannabschnitten (7f, 7f) zum Einfügen und Befestigen von Zungenteilen (6e, 6e) des Ventilatorummantelungsabschnitts (6) in Vorwärts- und Rückwärtsrichtung desselben versehen ist.

2. Kühlerträgerkonstruktion nach Anspruch 1, **dadurch gekennzeichnet, daß** die Konstruktion außerdem eine lösbare Haubenverriegelungsstrebe (8) umfaßt, die mittige Abschnitte der oberen Kühlerträgerabdeckung (7) und des unteren Kühlerträgers (4) miteinander befestigt.

3. Kühlerträgerkonstruktion nach Anspruch 1 oder 2, **dadurch gekennzeichnet, daß** die obere Kühlerträgerabdeckung (7) außerdem an einem oberen Abschnitt des Ventilatorummantelungsabschnitts (6) lösbar befestigt ist.

4. Kühlerträgerkonstruktion nach einem der Ansprüche 1 bis 3, **dadurch gekennzeichnet, daß** die Kühlerträgerseiten (5, 5) jeweils mit einer Lampenstütze (5b, 5b) versehen ist, die in der Nähe eines Seitenelementbefestigungslochs (5a, 5a) ausgebildet ist, wobei die Lampenstütze (5b, 5b) zum Befestigen und Halten eines Scheinwerfers in seitlicher Richtung nach außen vorsteht.

5. Kühlerträgerkonstruktion nach einem der Ansprüche 1 bis 4, **dadurch gekennzeichnet, daß** zwei Zungenteile (6e, 6e) in Plattenform an den Spannabschnitten (7f, 7f) entsprechenden Positionen nach oben vorstehen, wobei die Spannabschnitte aus zwei an einer Bodenfläche der oberen Kühlerträgerabdeckung (7) gebildeten Teilen bestehen.

6. Kühlerträgerkonstruktion nach einem der Ansprüche 1 bis 5, **dadurch gekennzeichnet, daß** der untere Kühlerträger (4) mit einem Querschnitt in Form des Buchstabens L oder dergleichen ausgebildet ist, der sich nach unten und nach hinten öffnet.

## Revendications

1. Structure de support de radiateur, comprenant :
un support de radiateur inférieur (4) s'étendant dans une direction latérale d'une carrosserie de véhicule à moteur et supportant une partie inférieure d'un échangeur de chaleur ;
des côtés de support de radiateur (5, 5) s'étendant vers le haut respectivement à partir des deux parties d'extrémité dudit support de radiateur inférieur (4) ;
une partie de déflecteur de ventilateur (6) prévue à l'intérieur dudit support de radiateur inférieur (4) et desdits deux côtés de support de faisceau de radiateur (5, 5) ; et
un couvercle supérieur (7) de support de radiateur prévu pour recouvrir au moins un côté supérieur entre lesdits deux côtés de support de radiateur (5, 5),
ce par quoi
ledit support de radiateur inférieur (4), lesdits deux côtés du support de radiateur (5, 5) et ladite partie de déflecteur de ventilateur (6) sont formés en une seule pièce,
la structure de support de radiateur étant **caractérisée en ce que**:
ledit couvercle supérieur (7) du support de radiateur est fixé de manière détachable au moins sur des parties supérieures desdits côtés de support de faisceau de radiateur (5, 5),
ledit couvercle supérieur (7) du support de radiateur est formé avec des trous de fixation (7b, 7b) pour fixer des broches de montage (P2, P2) dudit échangeur de chaleur (2), et est pourvu, sur sa surface inférieure, de parties de retenue (7f, 7f) pour prendre en sandwich et fixer des languettes (6e, 6e) de ladite partie de déflecteur de ventilateur (6) dans sa direction vers l'avant et vers l'arrière.

2. Structure de support de radiateur selon la revendication 1, **caractérisée en ce que** ladite structure comprend en outre une tige de verrouillage de capot (8) détachable fixant des parties centrales dudit couvercle supérieur (7) du support de radiateur et dudit support de radiateur inférieur (4) l'une à l'autre.

3. Structure de support de radiateur selon la revendication 1 ou 2, **caractérisée en ce que** ledit couvercle supérieur (7) du support de radiateur est en outre fixé de manière détachable sur une partie supérieure de ladite partie de déflecteur de ventilateur (6).

4. Structure de support de radiateur selon l'une des revendications 1 à 3, **caractérisée en ce que** lesdits côtés de support de radiateur (5, 5) sont respectivement prévus avec un support de lampe (5b, 5b) formé à proximité d'un trou de fixation d'élément latéral (5a, 5a), ledit support de lampe (5b, 5b) faisant saillie vers l'extérieur dans la direction latérale pour fixer et supporter un phare.

5. Structure de support de radiateur selon l'une des revendications 1 à 4, **caractérisée en ce que** deux languettes (6e, 6e) font saillie vers le haut selon une forme de plaque à des positions correspondant aux parties de retenue (7f, 7f), lesdites parties de retenue étant composées de deux pièces formées sur une face inférieure du couvercle supérieur (7) du support de radiateur.

6. Structure de support de radiateur selon l'une des revendications 1 à 5, **caractérisée en ce que** le support de radiateur inférieur (4) est formé de façon à présenter une section transversale en forme de L ou similaire, s'ouvrant vers le bas et vers l'arrière.
